Europäisches Patentamt

(19) European Patent Office

Office européen des brevets

(11) Publication number: **0 119 700**
**B1**

(12) **EUROPEAN PATENT SPECIFICATION**

(45) Date of publication of patent specification: **21.10.87**

(21) Application number: **84300590.1**

(22) Date of filing: **31.01.84**

(51) Int. Cl.⁴: **A 01 N 43/40** // (A01N43/40, 43:12)

(54) Herbicidal method and compositions based on fluoroxypyr and ethofumesate.

(30) Priority: **22.02.83 GB 8304829**

(43) Date of publication of application:
**26.09.84 Bulletin 84/39**

(45) Publication of the grant of the patent:
**21.10.87 Bulletin 87/43**

(84) Designated Contracting States:
**BE DE FR GB NL**

(56) References cited:
**EP-A-0 005 917**
**EP-A-0 067 712**
**US-A-4 110 104**

(73) Proprietor: **SCHERING AGROCHEMICALS LIMITED**
**Hauxton Cambridge CB2 5HU (GB)**

(72) Inventor: **Rea, Bryan Leslie**
**61 Dovecote Lane**
**Beeston Nottingham (GB)**
Inventor: **Mayes, Anthony Joseph**
**61 High Street**
**Little Shelford Cambridge (GB)**

(74) Representative: **Wells, Norman David et al**
**Schering Agrochemicals Limited Industrial Property Department Chesterford Park Research Station**
**Saffron Walden Essex CB10 1XL (GB)**

EP 0 119 700 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 119 700

**Description**

This invention provides a herbicidal composition which comprises:

(a) fluroxypyr (i.e. (4-amino-3,5-dichloro-6-fluoro-2-pyridinyl)oxyacetic acid or a salt or ester thereof), and

(b) ethofumesate (i.e. 2-ethoxy-2,3-dihydro-3,3-dimethyl-benzofuran-5-yl methanesulphonate), wherein the ratio by weight of (a):(b) is 1:50 to 1:1, desirably 1:40 to 1:2.5., in association with a suitable carrier and/or surface active agent.

In another aspect, the invention provides a method of combating weeds, which comprises applying to a locus infested or liable to be infested therewith, an effective amount of the two components (a) and (b).

Each of the components (a) and (b) is known separately to be herbicidally active, but we have found that the combination of (a) and (b) is surprisingly advantageous. The combination of (a) and (b) is synergistic.

Component (a) is preferably employed as the free acid, an alkali-metal (e.g. sodium or potassium) or alkanolamine (e.g. ethanolamine) salt, or a C1—10 alkyl (e.g. methyl, ethyl, 1-methylheptyl or iso-octyl) ester.

From the point of view of compatibility of the active components, component (a) is preferably an ester, especially the 1-methylheptyl ester.

The components (a) and (b) applied as a composition comprising both.

The present compounds are normally employed in the form of compositions containing a surface active agent and/or a carrier.

The compositions will normally be produced initially containing from 0.5 to 99%, preferably from 0.5 to 85%, and more usually from 10 to 50% by weight of the present compounds, which are diluted if necessary before application to the locus to be treated such that the concentration of active ingredient in the formulation applied is from 0.05 to 5% by weight.

The carrier may be water, in which case an organic solvent may also be present, though this is not usually employed. A flowable suspension concentrate may be formed by grinding the compound with water, a wetting agent and a suspending agent, e.g. xanthan gum.

The carrier may alternatively be a water immiscible organic solvent, e.g. a hydrocarbon which boils within the range 130—270°C, e.g. xylene, in which the compound is dissolved or suspended. An emulsifiable concentrate containing a water immiscible solvent may be formed with a surface active agent so that the concentrate acts as a self-emulsifiable oil on admixture with water.

The carrier may alternatively be a water-miscible organic solvent e.g. 2-methoxy ethanol, methanol, propylene glycol, diethylene glycol, diethylene glycol monoethyl ether, formamide or methylformamide.

The carrier may alternatively be a solid, which may be finely divided or granular. Examples of suitable solids are limestone, clays, sand, mica, chalk, attapulgite, diatomite, perlite, sepiolite, silicas, silicates, lignosulphonates and solid fertilizers. The carrier can be of natural or synthetic origin or can be modified natural material.

Wettable powders soluble or dispersible in water may be formed by admixing the compound in particulate form with a particulate carrier or spraying molten compound on to the particulate carrier, admixing a wetting agent and a dispersing agent and finely grinding the whole powder mixture.

An aerosol composition may be formed by admixing the compound with a propellant, e.g. a polyhalogenated alkane such as dichlorofluoromethane, and suitably also with a solvent.

The term 'surface active agent' is used in the broad sense to include materials variously called emulsifying agents, dispersing agents and wetting agents. Such agents are well known in the art.

The surface active agents used may comprise anionic surface active agents, for example mono- or di-esters of phosphoric acid with a fatty alcohol ethoxylate, or salts of such esters, fatty alcohol sulphates such as sodium dodecyl sulphate, ethoxylated fatty alcohol sulphates, ethoxylated alkylphenol sulphates, lignin sulphates, petroleum sulphonates, alkylaryl sulphonates such as alkyl-benzene sulphonates or lower alkylnaphthalene sulphonates, salts of sulphonated naphthaleneformaldehyde condensates, salts of sulphonated phenolformaldehyde condensates, or more complex sulphonates such as the amide sulphonates, e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated naphthaleneformaldehyde condensates, salts of sulphonated

2

**0 119 700**

phenolformaldehyde condensates, sodium oleoyl N-methyltauride, dialkyl sulphosuccinates, alkyl phenol ethoxylates, and fatty alkyl ethoxylates.

If desired, the compositions may contain one or more further pesticides, e.g. herbicides, fungicides or insecticides in addition to components (a) and (b).

Especially preferred further herbicides include clopyralid, benazolin, ioxynil, bromoxynil, and phenoxyaliphatic acids, particularly mecoprop, dichlorprop, MCPA and 2,4-D.

The present method and compositions are highly effective for the selective control of broad leaf weeds in crops.

Amongst the weeds which are combatted are *Galium, Stellaria, Lamium, Galeopsis, Polygonum, Matricaria, Poa, Alopercurus, Hordeum, Bromus, Avena, Holcus, Brassica, Sinapis, Veronica, Trifolium* and *Chenopodium spp.*

Crops in which the present method and compositions may be employed include grass crops such as ryegrass (perennial, westerwold or Italian particularly), cocksfoot, meadow fescue, tall fescue and timothy.

In the present method, usually 0.25—5, preferably 1—3 kg in total of (a) and (b) are applied per hectare. The amount of (a) applied is preferably 0.01 to 0.5 kg/ha, and the amount of (b) applied is preferably 0.5 to 4 kg/ha.

The composition comprising (a) and (b) is preferably applied post-emergence of the weeds.

The following Example is now given, though only by way of illustration:

Example

Seeds of the following plant species were sown in pots in the glasshouse, and immediately after emergence were sprayed with the treatments listed below in 200 litres/hectare to give the stated rates of application. Three pots were sprayed with each treatment.

In the tests the 1-methylheptyl ester of fluroxypyr was employed.

The results obtained, expressed as percentage control compared with untreated pots, were as follows:

(a) Treatment 1—ethofumesate 1.0 kg/ha
    Treatment 2—fluroxypyr 0.025 kg/ha
    Treatment 3—ethofumesate 1.0 kg/ha+fluroxypyr 0.025 kg/ha

| Species | Days after treatment | Treatment No. | | |
|---------|---------------------|---|---|---|
| | | 1 | 2 | 3 |
| *Matricaria recutita* | 6 | 0 | 40 | 55 |
| *Veronica persica* | 6 | 20 | 43 | 70 |
| *Galium aparine* | 11 | 30 | 28 | 70 |
| *Trifolium repens* | 17 | 40 | 43 | 95 |

(b) Treatment 1—ethofumesate 0.5 kg/ha
    Treatment 2—fluroxypyr 0.025 kg/ha
    Treatment 3—ethofumesate 0.5 kg/ha+fluroxypyr 0.025 kg/ha

| Species | Days after treatment | Treatment No. | | |
|---------|---------------------|---|---|---|
| | | 1 | 2 | 3 |
| *Brassica spp.* | 17 | 35 | 18 | 70 |
| *Matricaria recutita* | 26 | 40 | 15 | 80 |
| *Veronica persica* | 26 | 30 | 40 | 95 |

(c) Treatment 1—ethofumesate 0.25 kg/ha
    Treatment 2—fluroxypyr 0.1 kg/ha
    Treatment 3—ethofumesate 0.25 kg/ha+fluoroxypyr 0.1 kg/ha

| Species | Days after treatment | Treatment No. | | |
|---------|---------------------|---|---|---|
| | | 1 | 2 | 3 |
| *Matricaria recutita* | 6 | 0 | 60 | 75 |
| *Brassica spp.* | 17 | 30 | 20 | 65 |

3

## Claims

1. A herbicidal composition which comprises:

(a) fluroxypyr (ie (4-amino-3,5-dichloro-6-fluoro-2-pyridyl)oxyacetic acid or a salt or ester thereof), and

(b) ethofumesate (ie 2-ethoxy-2,3-dihydro-3,3-dimethylbenzofuran-5-yl methanesulphonate),

wherein the ratio by weight of (a) to (b) is from 1:50 to 1:1, in association with a suitable carrier and/or surface active agent.

2. A composition according to claim 1 wherein component (a) is employed as an alkali-metal or alkanolamine salt.

3. A composition according to claim 1 wherein component (a) is employed as a C1—10 alkyl ester.

4. A composition according to claim 3 wherein component (a) is employed as the 1-methylheptyl ester.

5. A composition according to any of claims 1 to 4 wherein the ratio by weight of (a) to (b) is from 1:40 to 1:2.5.

6. A method of combatting weeds which comprises applying simultaneously to a locus infested or liable to be infested therewith, an effective amount of (a) fluroxypyr and (b) ethofumesate, according to claim 1.

7. A method according to claim 6 wherein components (a) and (b) are applied in the form of a composition according to any of claims 1 to 5.

8. A method according to claim 6 or claim 7 wherein from 0.25 to 5 kg in total of (a) and (b) are applied per hectare.

9. A method according to any of claims 6 to 8 wherein the locus is one at which a grass crop is growing.

## Patentansprüche

1. Herbizides Mittel bestehend aus

a) Fluroxypyr (4-Amino-3,5-dichlor-6-fluor-2-pyridyl)oxyessigsäure, ein Salz oder Ester dieser Verbindung) und

b) Ethofumesat (2-Ethoxy-2,3-dihydro-3,3-dimethylbenzofuran-5-yl-methansulfonat,

wobei das Gewichtsverhältnis von (a) zu (b) 1:50 bis 1:1 beträgt, zusammen mit einem geeigneten Träger und/oder einem oberflächenaktiven Mittel.

2. Mittel gemäß Anspruch 1, wobei der Bestandteil (a) als Alkalimetall- oder Alkanolamin-Salz verwendet wird.

3. Mittel gemäß Anspruch 1, wobei der Bestandteil (a) als $C_{1-10}$-Alkylester verwendet wird.

4. Mittel gemäß Anspruch 3, wobei der Bestandteil (a) als 1-Methylheptylester verwendet wird.

5. Mittel gemäß den Ansprüchen 1 bis 4, wobei das Gewichtsverhältnis von (a) zu (b) 1:40 bis 1:2,5 beträgt.

6. Verfahren zur Bekämpfung von unerwünschtem Pflanzenwuchs, dadurch gekennzeichnet, daß man eine wirksame Menge Fluroxypyr (a) und Ethoxymesat (b), gemäß Anspruch 1, gleichzeitig auf die Nutzpflanzenkulturen oder deren Anbauflächen aufbringt.

7. Verfahren gemäß Anspruch 6, wobei die Bestandteile (a) und (b) in Form eines Mittels gemäß den Ansprüchen 1 bis 5 angewendet werden.

8. Verfahren gemäß Anspruch 6 oder 7, wobei (a) und (b) in einer Gesamtmenge von 0,25 bis 5 kg pro Hektar angewendet werden.

9. Verfahren gemäß den Ansprüchen 6 bis 8, wobei die Nutzpflanzenkultur Gras ist.

## Revendications

1. Composition herbicide qui comprend:

(a) du fluroxypyr (c'est-à-dire de l'acide (4-amino-3,5-dichloro-6-fluoro-2-pyridyl)oxyacétique ou un sel ou ester de celui-ci), et

(b) de l'éthofumésate (c'est-à-dire du méthanesulfonate de 2-éthoxy-2,3-dihydro-3,3-diméthylbenzofurann-5-yle),

dans laquelle le rapport en poids de (a) à (b) est de 1:50 à 1:1, en association avec un excipient et/ou un agent tensio-actif appropriés.

2. Composition suivant la revendication 1, dans laquelle le composant (a) est utilisé sous la forme d'un sel de métal alcalin ou d'alcanolamine.

3. Composition suivant la revendication 1, dans laquelle le composant (a) est utilisé sous la forme d'un ester alcoylique en C1—10.

4. Composition suivant la revendication 3, dans laquelle le composant (a) est utilisé sous la forme de l'ester 1-méthylheptylique.

5. Composition suivant l'une quelconque des revendications 1 à 4, dans laquelle le rapport en poids de (a) à (b) est de 1:40 à 1:2,5.

6. Procédé pour combattre les plantes adventices, qui comprend l'application simultanée sur un lieu qui est infesté par celles-ci ou susceptible de l'être d'une quantité efficace (a) de fluroxypyr et (b) d'éthofumésate, suivant la revendication 1.

7. Procédé suivant la revendication 6, dans lequel les composants (a) et (b) sont appliqués sous la forme d'une composition suivant l'une quelconque des revendications 1 à 5.

8. Procédé suivant la revendication 6 ou 7, dans lequel 0,25 à 5 kg au total de (a) et (b) sont appliqués par hectare.

9. Procédé suivant l'une quelconque des revendications 6 à 8, dans lequel le lieu est un lieu dans lequel une culture herbagère est en croissance.